# EUROPÄISCHE PATENTANMELDUNG

(11) **EP 1 375 767 A1**
(43) Veröffentlichungstag der Anmeldung: **02.01.2004**
(21) Anmeldenummer: 03008397.6
(22) Anmeldetag: 11.04.2003
(51) Int. Cl.: E04B 1/86

(54) **Schallabsorbierende Platte und Möbelstück mit einer solchen Platte**

(30) Priorität: 27.06.2002 DE 20209926 U
(71) Anmelder: CEKA-BÜROMÖBEL WERKE C. KRAUSE UND SOHN GmbH & Co. KG, D-36304 Alsfeld (DE)
(72) Erfinder: Walz, Walter, 35325Mücke (DE)
(74) Vertreter: KEIL & SCHAAFHAUSEN

(57) **Zusammenfassung**

Eine schallabsorbierende Platte, insbesondere Front für Möbelstücke, mit einer mit Durchbrüchen (7) versehenen ersten Schicht (3) und einer mit Durchbrüchen (7) versehenen zweiten Schicht (4), die der ersten Schicht (3) gegenüberliegt, wobei sich die Durchbrüche (7) der ersten Schicht (3) und der zweiten Schicht (4) wenigstens teilweise überdecken, ist dadurch gekennzeichnet, dass zwischen der ersten Schicht (3) und der zweiten Schicht (4) eine schallabsorbierende Schicht (2) angeordnet ist.

## Beschreibung

Die vorliegende Erfindung betrifft eine schallabsorbierende Platte, insbesondere eine Front für Möbelstücke, mit einer mit Durchbrüchen versehenen ersten Schicht und einer mit Durchbrüchen versehenen zweiten Schicht, die der ersten Schicht gegenüberliegt, wobei sich die Durchbrüche der ersten Schicht und der zweiten Schicht wenigstens teilweise überdecken. Weiter betrifft die Erfindung ein Möbelstück mit einer derartigen schallabsorbierenden Platte.

Schalldämmende oder schallabsorbierende Platten und deren Verwendung als Decken- oder Wandverkleidung oder als Trennwand sind zur Minderung des Geräuschpegels in Räumen bekannt. In der EP 0 388 355 A1 ist eine schallabsorbierende Lochplatte offenbart, die aus einer Spanplatte mit Sacklöchern mit vergleichsweise großem Radius und einer Furnierschicht mit vergleichsweise kleinen Löchern aufgebaut ist. Da die Herstellung dieser furnierten Spanplatte als teuer und aufwendig beschrieben wird, wird vorgeschlagen, in der schallabsorbierenden Platte in wenigstens einer Oberfläche mehrere Nuten vorzusehen, die mit schallabsorbierenden Löchern verbunden sind. Die Platte kann weiter mit Glaswolle, Steinwolle oder dgl. hinterlegt sein. In der DE 198 57 419 A1 ist eine vergleichbare schallabsorbierende Platte offenbart, die auf beiden Seiten zueinander parallel verlaufend ausgerichtete Nuten aufweist. Abschnittsweise sind die Nuten einer Seite der Platte so tief ausgebildet, dass sie mit den Nuten der anderen Seite der Platte schlitzförmige Durchgangsöffnungen definieren. Zusätzlich kann ein Schallabsorbervlies auf einer Seite der Platte angeordnet sein.

Diese bekannten schallabsorbierenden Platten weisen den Nachteil auf, dass die schallabsorbierende Vliesschicht auf einer der Außenflächen der Platte angebracht ist. Die schallabsorbierende Wirkung tritt daher hauptsächlich dann ein, wenn die Schallwellen aus einer Richtung auf die Platte treffen. Demgegenüber ist die Wirkung der schallabsorbierenden Platte geringer, wenn die Schallwellen aus der entgegengesetzten Richtung auf die Platte auftreffen. Zudem besteht die Gefahr, dass die schallabsorbierende Vliesschicht beschädigt wird oder sich von der Platte löst.

Es ist daher die Aufgabe der vorliegenden Erfindung, eine schallabsorbierende Platte der eingangs genannten Art bereitzustellen, bei der die Gefahr einer Beschädigung oder des Ablösens einer schallabsorbierenden Schicht weitgehend vermieden wird, und die eine gute schallabsorbierende Wirkung beim Auftreffen von Schallwellen auf die Platte aus unterschiedlichen Richtungen erzielt. Weiter soll ein Möbelstück mit einer derartigen Platte bereitgestellt werden.

Diese Aufgabe wird erfindungsgemäß dadurch gelöst, dass zwischen der ersten Schicht und der zweiten Schicht der schallabsorbierenden Platte eine schallabsorbierende Schicht angeordnet ist. Die schallabsorbierende Platte besitzt damit einen mehrschichtigen Aufbau mit zwei einander gegenüberliegenden Schichten und einer dazwischen liegenden schallabsorbierenden Schicht, wobei in jeder der äußeren Schichten Durchbrüche vorgesehen sind, die mit denen der gegenüberliegenden Schichten in Verbindung stehen und somit die schallabsorbierende Schicht freilegen. Die schallabsorbierende Wirkung der Platte tritt daher in gleichem Maße ein, wenn Schallwellen auf die erste äußere Schicht oder die zweite äußere Schicht auftreffen. Eine Beschädigung der schallabsorbierenden Schicht kann dadurch weitgehend vermieden werden, dass diese nur im Bereich der Durchbrüche der äußeren Schichten offengelegt ist. Auch wird ein Ablösen der schallabsorbierenden Schicht vermieden, da diese sicher zwischen den beiden äußeren Schichten gehalten ist.

Wenn die erste Schicht und/oder die zweite Schicht mit Schlitzen versehen sind, lassen sich die Durchbrüche besonders einfach, bspw. durch Fräsen, in die einzelnen Schichten einbringen.

Nach einer bevorzugten Ausführungsform der Erfindung sind die erste Schicht und/oder die zweite Schicht zwei- oder mehrlagig aufgebaut. Dadurch kann die Biegesteifigkeit der einzelnen Schichten sowie der Platte insgesamt gezielt vergrößert werden. Zudem können die inneren Lagen aus einem günstigeren Werkstoff gefertigt werden, während für die äußersten Lagen ein optisch ansprechender teurerer Werkstoff eingesetzt werden kann.

Vorzugsweise bestehen die erste Schicht und die zweite Schicht aus jeweils zwei Lagen, die mit Schlitzen versehen sind. Die Schlitze der beiden Lagen der ersten und zweiten Schicht verlaufen nach einer bevorzugten Ausführungsform im Wesentlichen rechtwinklig zueinander. Mit anderen Worten ist jede der beiden Schichten gitterförmig gestaltet, wobei die Stege zwischen den Schlitzen jeder Lage die einander kreuzenden Gitterlinien bilden. Auf diese Weise werden Bereiche gebildet, die aus einem oder zwei übereinanderliegenden Stegen zwischen den Schlitzen bestehen und den Durchbrüchen in den Bereichen, in denen die Schlitze übereinander liegen.

Die Stabilität der Platte kann dadurch weiter gesteigert werden, dass die Schlitze nur in der Mitte der jeweiligen Schicht verlaufen und so ein Raster mit einem nicht mit Schlitzen versehenen Rand definieren. Dieser Randbereich weist zwar keine Durchbrüche auf und trägt daher nicht zur schallabsorbierenden Wirkung der Platte bei, er kann jedoch zur Befestigung der Platte dienen und bspw. mit Beschlägen oder ähnlichem versehen werden. Hierfür wird es bevorzugt, dass der Rand eine Breite zwischen 30 mm und 60 mm, insbesondere etwa 45 mm, aufweist.

Die Schlitze in benachbarten Lagen einer Schicht können in verschiedenem Raster angeordnet sein. So sind die Schlitze der an der schallabsorbierenden Schicht anliegenden Lage bspw. im Raster 6, 4 mm in Längsrichtung geschlitzt, während die äußeren Lagen der Schichten im Raster von 12.5 mm in Querrichtung geschlitzt sind.

Die schallabsorbierende Platte weist besonders günstige Eigenschaften auf, wenn wenigstens eine der beiden Schichten aus einem Holzwerkstoff, insbesondere einer Holzfaserplatte besteht. Es ist dabei nicht notwendig, dass die einzelnen Lagen jeder Schicht aus dem gleichen Material bestehen, vielmehr kann die der schallabsorbierenden Schicht zugewandte Lage bspw. aus einer Holzfaserplatte bestehen, während die äußeren Lagen der Schichten durch eine Furnierschicht gebildet sind, um der Platte ein ansprechendes Äußeres zu geben. Die Schlitze werden dabei vorzugsweise einsatzgefräst.

Eine besonders gute schallabsorbierende Wirkung tritt bei der Verwendung eines Akustikvlieses als schallabsorbierende Schicht ein. Ein derartiges Akustikvlies kann bspw. aus Glaswolle, Steinwolle oder dgl. bestehen.

Die der Erfindung zugrundeliegende Aufgabe wird weiter mit einem Möbelstück mit einer schallabsorbierenden Platte gelöst, die wenigstens einen Bereich der Außenfläche des Möbelstücks bildet. Um eine schallabsorbierende Wirkung zu erzielen, ist es nicht notwendig, den gesamten Raum mit schallabsorbierenden Decken- und Wandflächen aus- oder nachzurüsten, sondern bereits der Einsatz von Möbelstücken mit schallabsorbierenden Platten führt zu einer erheblichen Minderung des Geräuschpegels in Räumen.

Es wird besonders bevorzugt, dass bei einem Möbelstück hinter der schallabsorbierenden Platte ein Hohlraum vorgesehen ist. Die schallabsorbierende Platte kann dabei bspw. als Frontplatte oder als Tür eingesetzt werden. Durch den hinter der schallabsorbierenden Platte vorgesehenen Hohlraum bildet der Korpus des Möbelstücks ein integratives Element eines schallabsorbierenden Systems, das nach dem Prinzip der Helmholtzresonatoren arbeitet. Der schallabsorbierende Effekt beruht darauf, dass ein wesentlicher Anteil der auftreten Schallenergie durch die Durchbrüche in das Innere des Möbelstücks eindringen, aus diesem jedoch nicht wieder austritt. Gleichzeitig wird der Anteil der von dem Möbelstück reflektierten Schallmenge reduziert.

Die Erfindung wird nachfolgend anhand eines Ausführungsbeispiels und der Zeichnung erläutert.

Es zeigen:

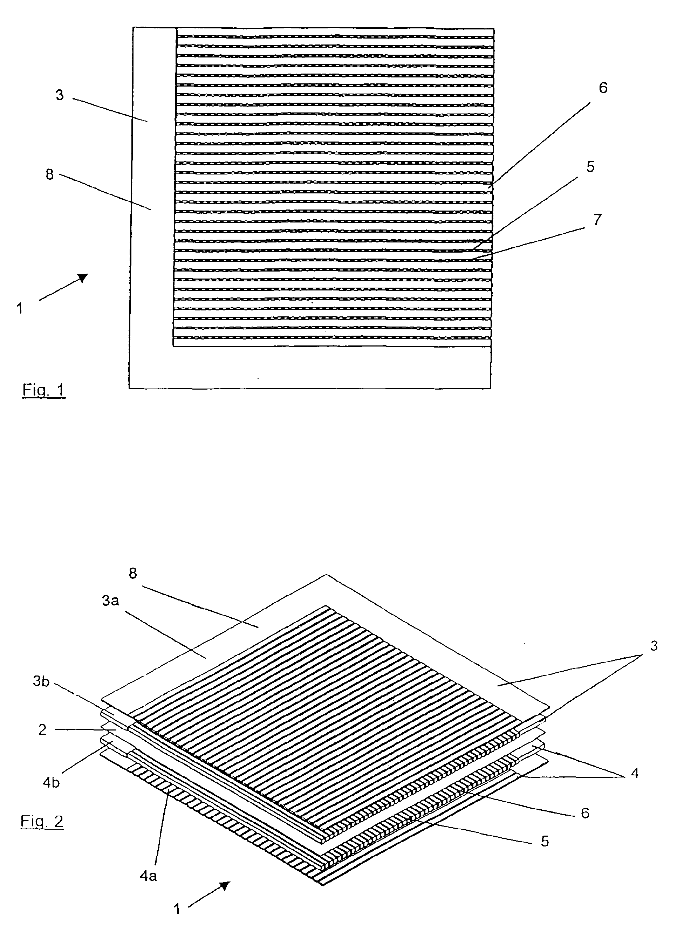

- Fig. 1: eine Draufsicht auf einen Ausschnitt aus einer erfindungsgemäßen Platte und
- Fig. 2: eine dreidimensionale Ansicht der Platte nach Fig. 1.

Die in den Figuren gezeigte Platte 1 weist, wie in Fig. 2 dargestellt, einen mehrschichtigen Aufbau auf. Auf beiden Seiten einer in der Figur mittleren schallabsorbierenden Schicht 2 sind äußere Schichten 3 und 4 vorgesehen. Sowohl die erste, in der Figur obere Schicht 3 als auch die zweite untere Schicht 4 sind jeweils zweilagig mit einer äußeren Furnierlage 3a bzw. 4a und einer inneren, an die schallabsorbierende Schicht 2 angrenzenden Lage 3b bzw. 4b.

In den äußeren Lagen 3a und 4a verlaufen zueinander parallele Schlitze 5, die Durchbrüche durch die Lagen 3a und 4a definieren. In gleicher Weise sind in den Lagen 3b und 4b zueinander parallel Schlitze eingebracht, die jedoch zu den Schlitzen der äußeren Lagen 3a, 4a senkrecht verlaufen. Auf diese Weise wird durch die Schlitze 5 in jeder der beiden Schichten 3 und 4, die aus den Lagen 3a, 3b bzw. 4a, 4a bestehen, ein gitterförmiges Raster durch die Schlitze 5 und Stege 6 zwischen den Schlitzen gebildet. An den Stellen, an denen die Schlitze 5 der äußeren Lagen 3a, 4a auf Schlitze in den inneren Lagen 3b, 4b treffen, sind in den Schichten 3 bzw. 4 Durchbrüche 7 gebildet, wobei die Durchbrüche in der Schicht 3 deckungsgleich über denen in der Schicht 4 liegen. Mit anderen Worten stehen die Durchbrüche 7 der beiden Schichten 3 und 4 miteinander in Verbindung, sind jedoch durch die schallabsorbierende Schicht 2 voneinander getrennt.

Die Schlitze 5 erstrecken sich nicht über die gesamte Fläche der Platte 1, sondern verlaufen in einem mittleren Bereich der Platte 1, wobei ein seitlicher Rand 8 definiert wird. Der Rand 8 dient zur Befestigung der Platte 1 und es können an dem Rand Beschlagteile oder ähnliches vorgesehen sein.

Die der schallabsorbierenden mittleren Schicht 2 zugewandten Lagen 3b, 4b der Schichten 3 und 4 bilden eine Unterkonstruktion, bspw. aus Holzfaserplatten. Die Schlitze 5 in den Lagen 3b, 4b können bspw. im Raster 6,4 mm verlaufen, wobei der Rand eine Breite von ca. 45 mm aufweist. Die Lagen 3b, 4b sind vorzugsweise mit der schallabsorbierenden Schicht 2, die bspw. ein Akustikvlies ist, verklebt. Die äußeren Lagen 3a, 4a der Schichten 3, 4 bilden die Sichtflächen der Platte 1 und können bspw. aus einem Furnier gefertigt sein. Die Schlitze 5 verlaufen nach einer Ausführungsform in den Lagen 3a und 4a im Raster von 12, 5 mm, wobei der umlaufende Rand eine Breite von etwa 45 mm aufweist.

Bei der Verwendung der Platte 1 in einem Möbelstück dient dieses als integratives Schallschluckelement, da Schallwellen durch die Platte 1 gebrochen, gefiltert und in den Korpus des Möbelstücks eingeleitet werden, aus dem sie jedoch nicht oder nur zu einem minimalen Anteil wieder austreten können.

### Bezugszeichenliste:

- 1: Platte
- 2: schallabsorbierende Schicht
- 3: erste Schicht
- 3a: äußere Lage der Schicht 3
- 3b: innere Lage der Schicht 3
- 4: zweite Schicht
- 4a: äußere Lage der Schicht 4
- 4b: innere Lage der Schicht 4
- 5: Schlitz
- 6: Steg
- 7: Durchbruch
- 8: Rand

## Patentansprüche

1. Schallabsorbierende Platte, insbesondere Front für Möbelstücke, mit einer mit Durchbrüchen (7) versehenen ersten Schicht (3) und einer mit Durchbrüchen (7) versehenen zweiten Schicht (4), die der ersten Schicht (3) gegenüberliegt, wobei sich die Durchbrüche (7) der ersten Schicht (3) und der zweiten Schicht (4) wenigstens teilweise überdecken, **dadurch gekennzeichnet, dass** zwischen der ersten Schicht (3) und der zweiten Schicht (4) eine schallabsorbierende Schicht (2) angeordnet ist.

2. Platte nach Anspruch 1, **dadurch gekennzeichnet, dass** die erste Schicht (3) und/oder die zweite Schicht (4) mit Schlitzen (5) versehen sind, welche die Durchbrüche (7) bilden.

3. Platte nach Anspruch 1 oder 2, **dadurch gekennzeichnet, dass** die erste Schicht (3) und/oder die zweite Schicht (4) zwei- oder mehrlagig sind.

4. Platte nach Anspruch 3, **dadurch gekennzeichnet, dass** die erste Schicht (3) und die zweite Schicht (4) aus jeweils zwei Lagen (3a, 4a, 3b, 4b) bestehen, die mit Schlitzen (5) versehen sind.

5. Platte nach Anspruch 4, **dadurch gekennzeichnet, dass** die Schlitze (5) der beiden Lagen (3a, 4a, 3b, 4b) der ersten und zweiten Schicht (3, 4) im Wesentlichen rechtwinklig zueinander verlaufen.

6. Platte nach einem der Ansprüche 2 bis 5, **dadurch gekennzeichnet, dass** die Schlitze (5) nur in der Mitte der jeweiligen Schicht (3, 4) verlaufen und so ein Raster mit einem nicht mit Schlitzen (5) versehenen Rand (8) definieren.

7. Platte nach Anspruch 6, **dadurch gekennzeichnet, dass** der Rand (8) eine Breite zwischen 30 mm und 60 mm, insbesondere etwa 45 mm, aufweist.

8. Platte nach einem der Ansprüche 4 bis 7, **dadurch gekennzeichnet, dass** die Schlitze (5) in benachbarten Lagen (3a, 3b, 4a, 4b) in verschiedenem Raster angeordnet sind.

9. Platte nach einem der vorangegangenen Ansprüche, **dadurch gekennzeichnet, dass** wenigstens eine der beiden Schichten (3, 4) aus einem Holzwerkstoff, insbesondere einer Holzfaserplatte oder Furnier, besteht und die Schlitze (5) einsatzgefräst sind.

10. Platte nach einem der vorangegangenen Ansprüche, **dadurch gekennzeichnet, dass** die schallabsorbierende Schicht (2) ein Akustikvlies ist.

11. Möbelstück mit einer schallabsorbierenden Platte (1) nach einem der vorangegangenen Ansprüche, die wenigstens einen Bereich der Außenfläche des Möbelstücks bildet.

12. Möbelstück nach Anspruch 11, **dadurch gekennzeichnet, dass** hinter der Platte (1) ein Hohlraum vorgesehen ist.
